# EUROPÄISCHE PATENTANMELDUNG

(11) **EP 2 277 369 A1**
(43) Veröffentlichungstag der Anmeldung: **26.01.2011**
(21) Anmeldenummer: 10161237.2
(22) Anmeldetag: 28.04.2010
(51) Int. Cl.: A01D 43/08, G05G 9/047

(54) **Multifunktionsgriff**

(30) Priorität: 20.07.2009 DE 102009034154
(71) Anmelder: CLAAS Selbstfahrende Erntemaschinen GmbH, 33428 Harsewinkel (DE)
(72) Erfinder: Jeppe, Eckehard, 34289, Zierenberg (DE); Ulbrich, René, 30163 Hannover (DE)

(57) **Zusammenfassung**

Ein Multifunktionsgriff (6) zum Steuern eines landwirtschaftlichen Fahrzeugs ist zum Einstellen von Parametern des Fahrzeugs in mehreren Positionen platzierbar. Er ist mit einem ersten, wenigstens ein Bedienelement (17, 18, 19) aufweisenden ersten Bedienfeld (16) ausgerüstet. Ferner weist er eine Auflagefläche (9), die orientiert ist, um wenigstens einen Teil des Handtellers einer in einer Betriebshaltung aufliegenden Hand eines Benutzers zu unterstützen, und wenigstens ein weiteres Bedienfeld (10) mit wenigstens einem Bedienelement (13, 14, 15) auf. Bedienelemente (17, 18, 13, 14) des ersten und des wenigstens einen weiteren Bedienfeldes (16, 10) sind für Finger der in der Betriebshaltung aufliegenden Hand erreichbar.

## Beschreibung

Die vorliegende Erfindung betrifft einen Multifunktionsgriff zum Steuern eines landwirtschaftlichen Fahrzeugs. Ein solcher Multifunktionsgriff ist zum Beispiel aus US 6 715 269 B2 bekannt. Dieser bekannte Griff hat einen Schaft, der in einer Kulisse eines Bedienpults verschiebbar geführt ist, und einen an einem Ende des Schafts angeordneten Kopf, an dem diverse Bedienelemente angebracht sind. Wenn die Hand den Schaft umgreift, sind die Bedienelemente im Wesentlichen nur für den Daumen der Hand erreichbar. Eine gleichzeitige Betätigung mehrerer Bedienelemente ist dadurch ausgeschlossen. Um nicht abzurutschen, muss die Hand den Schaft ständig fest greifen. Um die damit verbundene Anstrengung zu lindern, ist eine Unterarmstütze vorgesehen, doch es ist einer schnellen Bewegung des Griffs eher hinderlich, wenn der Arm auf der Stütze aufliegt.

Aufgabe der vorliegenden Erfindung ist, einen Multifunktionsgriff zum Steuern eines landwirtschaftlichen Fahrzeugs zu schaffen, der eine schnelle Verstellung bei lang andauernder, ermüdungsfreier Benutzung ermöglicht.

Die Aufgabe wird gelöst, indem bei einem Multifunktionsgriff zum Steuern eines landwirtschaftlichen Fahrzeugs, der zum Einstellen von Parametern des Fahrzeugs in mehreren Positionen platzierbar ist und mit einem ersten, wenigstens ein Bedienelement aufweisenden ersten Bedienfeld ausgerüstet ist, ferner eine Auflagefläche, die orientiert ist, um wenigstens einen Teil des Handtellers einer in einer Betriebshaltung aufliegenden Hand eines Benutzers zu unterstützen, und wenigstens ein weiteres Bedienfeld mit wenigstens einem Bedienelement vorgesehen ist und Bedienelemente des ersten und des wenigstens einen weiteren Bedienfeldes für Finger der in der Betriebshaltung aufliegenden Hand erreichbar sind. Da der Multifunktionsgriff die Hand in der Betriebsstellung unterstützt, kann eine zusätzliche Unterstützung des Unterarms entfallen, und der Unterarm bleibt jederzeit frei beweglich und ermöglicht eine schnelle Verstellung des Griffs. Der Griff kann locker und ohne Anspannung der Handmuskeln gehalten werden und ermöglicht langes ermüdungsfreies Arbeiten. Die zweite Bedienfläche schafft die Möglichkeit, mehrere Bedienelemente gleichzeitig zu betätigen und dadurch Steuerabläufe zu beschleunigen und zu effektivieren.

Die wirksamste Effektivierung der Bedienung wird erreicht, wenn das erste Bedienfeld für den Daumen und das zweite Bedienfeld für den Zeigefinger der in der Betriebshaltung auf der Auflagefläche aufliegenden Hand erreichbar ist.

Um für den Daumen gut erreichbar zu sein, ist das erste Bedienfeld vorzugsweise an einer seitlichen Flanke des Multifunktionsgriffs angeordnet.

An dem ersten Bedienfeld können wenigstens zwei als primär bezeichnete Bedienelemente vorgesehen sein, die durch Schwenken des Daumens einer Hand wahlweise erreichbar sind, wenn der Handteller dieser Hand auf der Auflagefläche in der Betriebshaltung aufliegt. Mit anderen Worten liegen die primären Bedienelemente auf einem Bogen, dessen Mittelpunkt durch einen Handwurzelknochen des Daumens verläuft.

Um eine Funktion des Fahrzeugs auszulösen, ist vorzugsweise wenigstens eines der primären Bedienelemente um eine in Längsrichtung des das Bedienelement berührenden Daumens und/oder eine in der Schwenkrichtung des Daumens orientierte Achse schwenkbar, so dass die entsprechende Funktion durch ein Krümmen oder Strecken des Daumens bzw. durch ein Schwenken des Daumens ausgelöst werden kann.

Um dem Daumen für die Auslösung einer solchen Betätigung sicheren Halt zu geben, weist das primäre Bedienelement an seiner Außenseite vorzugsweise eine Mulde auf, die die Kuppe des Daumens formschlüssig aufnimmt.

Es kann wenigstens ein weiteres, als sekundär bezeichnetes Bedienelement an dem ersten Bedienfeld vorgesehen sein, das für den Daumen einer auf der Auflagefläche in der Betriebshaltung aufliegenden Hand unerreichbar ist, sei es weil die Entfernung des sekundären Bedienelements von der Auflagefläche größer ist als die Länge des Daumens oder weil sie so gering ist, dass das sekundäre Bedienelement durch Krümmen des Daumens nicht erreichbar ist. Dieses sekundäre Bedienelement ist nur erreichbar, wenn die Hand von der Auflagefläche gelöst wird; es ist daher zweckmäßigerweise der Steuerung von Funktionen vorbehalten, die nicht an die über die Stellung des Multifunktionsgriffs gesteuerte Fortbewegung des landwirtschaftlichen Fahrzeugs gekoppelt sind bzw. die im kontinuierlichen Fahrbetrieb, der die an der Auflagefläche anliegende Hand erfordert, nicht oder nur ausnahmsweise benötigt werden wie etwa das Lösen einer Anfahrsperre oder eine Nothaltfunktion, die das Fahrzeug zum Stillstand bringt und dadurch jeden möglicherweise durch die Stellung des Griffs verkörperten, die Bewegung des Fahrzeugs betreffenden Befehl überlagert.

Das zweite Bedienfeld ist vorzugsweise an einer Oberseite des Multifunktionsgriffs, insbesondere in stetiger Verlängerung der Auflagefläche, angeordnet, um für den Zeigefinger oder auch den Mittelfinger der in der Betriebshaltung aufliegenden Hand bequem erreichbar zu sein. Ein in dem zweiten Bedienfeld angeordnetes Bedienelement ist daher wie die Auflagefläche aus der Blickrichtung des Fahrers sichtbar, was die Betätigung des betreffenden Bedienelements vereinfacht.

Um die Hand des Fahrers in einer bequemen, entspannten Haltung zu unterstützen, ist es zweckmäßig, dass eine Oberseite des Multifunktionsgriffs konvex gewölbt ist. Die Wölbung ist vorzugsweise so stark, dass Oberflächennormalen der Auflagefläche und des zweiten Bedienfeldes einen Winkel von ca. 90 bis maximal 120° aufspannen.

Das zweite Bedienfeld ist zweckmäßigerweise so platziert, dass das wenigstens eine Bedienelement oder wenigstens eines der Bedienelemente des zweiten Bedienfeldes mit dem ausgestreckten Zeigefinger der in der Betriebshaltung auf der Auflagefläche aufliegenden Hand erreichbar ist, so dass es durch ein Krümmen des ausgestreckten Fingers betätigt werden kann.

Ein Wippschalter als Bedienelement des zweiten Bedienfeldes ist vorzugsweise mit Zeigefinger und Mittelfinger der in der Betriebshaltung auf der Auflagefläche aufliegenden Hand betätigbar.

Es kann auch ein Bedienelement im zweiten Bedienfeld in geringerer Entfernung zur Anflagefläche angeordnet sein, so dass es mit dem gekrümmten Zeigefinger betätigbar ist. Ein solches Bedienelement ist vorzugsweise in einer Vertiefung des zweiten Bedienfeldes angeordnet, so dass es nicht versehentlich betätigt werden kann, wenn sich der ausgestreckte Zeigefinger darüber erstreckt.

Vorzugsweise ist die Oberseite des Griffs von der Auflagefläche zum zweiten Bedienfeld hin keilartig verjüngt, und dem ersten Bedienfeld liegt eine Flanke des Griffs gegenüber, die für wenigstens einen Finger der in der Betriebshaltung auf der Auflagefläche aufliegenden Hand erreichbar ist. So kann ein Benutzer sogar, während er ein Bedienelement des zweiten Bedienfeldes betätigt, den Griff zwischen Daumen und übrigen Fingern packen und verschieben.

Um den Halt des Benutzers am Griff zu verbessern, insbesondere wenn er den Griff zu sich heranziehen will, kann zweckmäßigerweise eine Rille in der dem ersten Bedienfeld gegenüberliegenden Flanke ausgerichtet sein, um einen Finger der in der Betriebshaltung auf der Auflagefläche aufliegenden Hand aufzunehmen

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht eines Feldhäck slers als Beispiel eines landwirtschaft- lichen Fahrzeugs, für das der Multifunk- tionsgriff vorgesehen ist;
- Fig. 2: eine Ansicht des Kopfs des Multifunkti- onsgriffs aus der Perspektive des Fahrers des Fahrzeugs;
- Fig. 3: eine zu Fig. 2 analoge Ansicht des Kopfs des Multifunktionsgriffs mit einer darauf aufliegenden Hand;
- Fig. 4: eine Seitenansicht des Kopfs mit einer ein sekundäres Bedienelement betätigenden Hand; und

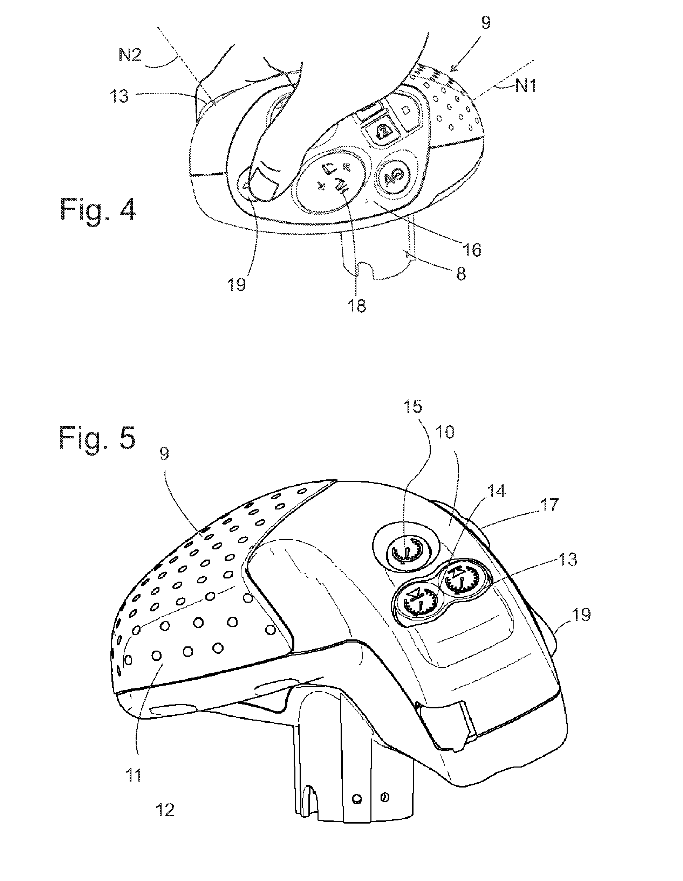

- Fig. 4: eine Ansicht des Multifunktionsgriffs von vorn, bezogen auf die Fahrtrichtung des Fahrzeugs.

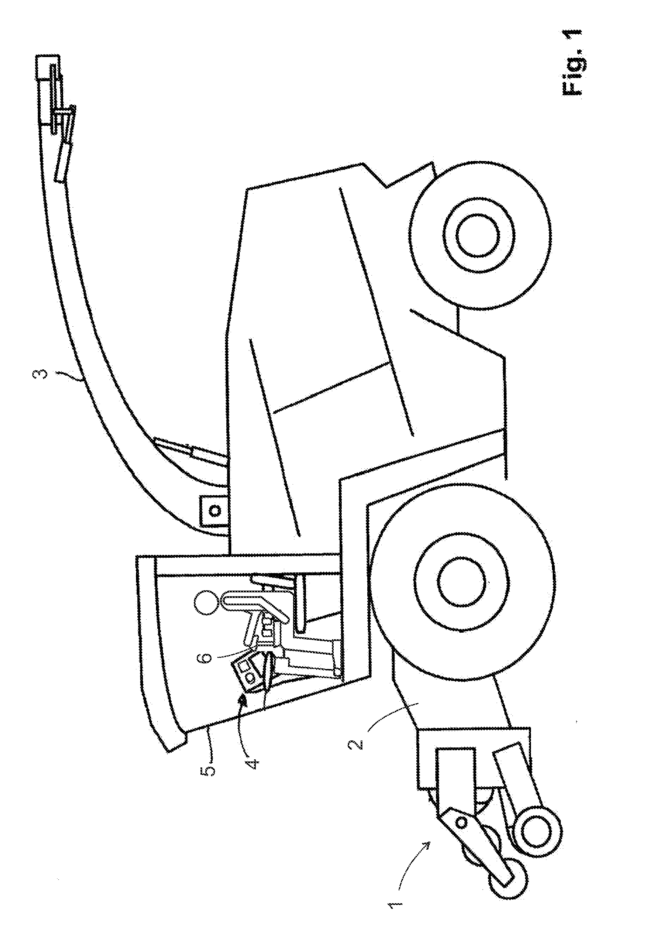

Der in Fig. 1 gezeigte Feldhäcksler ist dem Fachmann in seinen Grundzügen vertraut, so dass von einer Beschreibung seiner üblichen Baugruppen wie Erntevorsatz 1, Einzugsaggregat 2, Häckselwerk und Überladekrümmer 3 abgesehen werden kann. Bedienelemente zum Steuern der Funktionen dieser diversen Aggregate sind in einem Armaturenbrett 4 einer Fahrerkabine 5 und dort insbesondere an einem Multifunktionsgriff 6 angeordnet. Der Multifunktionsgriff 6 ist zum Steuern der Fortbewegung des Feldhäckslers in Bezug auf das Armaturenbrett 4 verstellbar. Er kann einen einzigen Verstell-Freiheitsgrad zum Steuern von Vorwärts- und Rückwärtsbewegungen des Feldhäckslers aufweisen, zum Beispiel in Form einer Kulissenführung vom in US 6 715 269 B2 gezeigten Typ. Vorzugsweise jedoch hat der Multifunktionsgriff 6 zwei Verstell-Freiheitsgrade, einen in Fahrtrichtung zum Steuern von Vorwärts- und Rückwärtsbewegung und -fahrgeschwindigkeit und einen in Fahrzeugquerrichtung zum Steuern der Fahrtrichtung.

Natürlich ist der im Folgenden genauer beschriebene Multifunktionsgriff nicht nur für einen Feldhäcksler sondern auch für beliebige andere landwirtschaftliche Fahrzeuge wie etwa einen Schlepper oder einen Mähdrescher brauchbar.

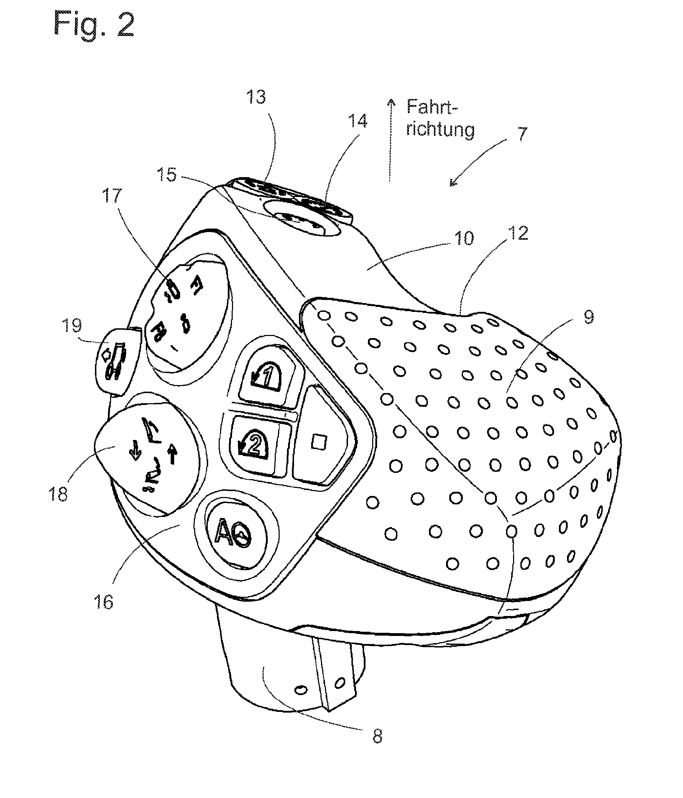

Fig. 2 zeigt eine perspektivische Ansicht des Kopfs 7 des Multifunktionsgriffs, gesehen aus der Blickrichtung des Fahrers. An die Unterseite des Griffkopfs 7 ist ein hohler Stutzen 8 angeformt, der vorgesehen ist, um einen in Fig. 2 nicht gezeigten Schaft des Griffs aufzunehmen, der den Kopf mit einem Gelenk im Armaturenbrett verbindet. Der Griffkopf 7 ist unregelmäßig geformt, so dass einzelne Seiten nicht scharf gegeneinander abgegrenzt sind, sondern an mehr oder weniger stark abgerundeten Kanten kontinuierlich ineinander übergehen. Dennoch ist eine dem Stutzen 8 in etwa entgegen gesetzte Oberseite als eine relativ schwach gekrümmte zusammenhängende Fläche identifizierbar, die in ihrem dem Fahrer zugewandten Bereich eine Auflagefläche 9 in dem Handteller eines Fahrers angepasster Form und Größe sowie in Fahrtrichtung daran angrenzend ein Bedienfeld 10 umfasst. Die Auflagefläche 9 ist in Fig. 2 erkennbar an darauf verteilten kleinen Vertiefungen.

Während die Auflagefläche 9 bemessen ist, um die Mittelhandknochen der zweiten bis fünften Finger auf ihrer gesamten Länge zu unterstützen, ist die Breite des Bedienfeldes 10 nur für Zeige- und Mittelfinger ausgelegt. So können die übrigen Finger an einer stark geneigten Flanke 11 an einer vom Fahrer abgewandten, in Fig. 2 nicht sichtbaren Seite des Griffkopfs 7 angreifen, und der Fahrer kann mit Hilfe dieser Finger den Griffkopf 7 zu sich hinziehen, auch wenn Zeige- und Mittelfinger auf der ersten Fingerauflagefläche 10 im Wesentlichen ausgestreckt sind und keinen Zug ausüben können. Diese Flanke 11 ist insbesondere in der Vorderansicht des Griffkopfs 7 von Fig. 6 zu erkennen.

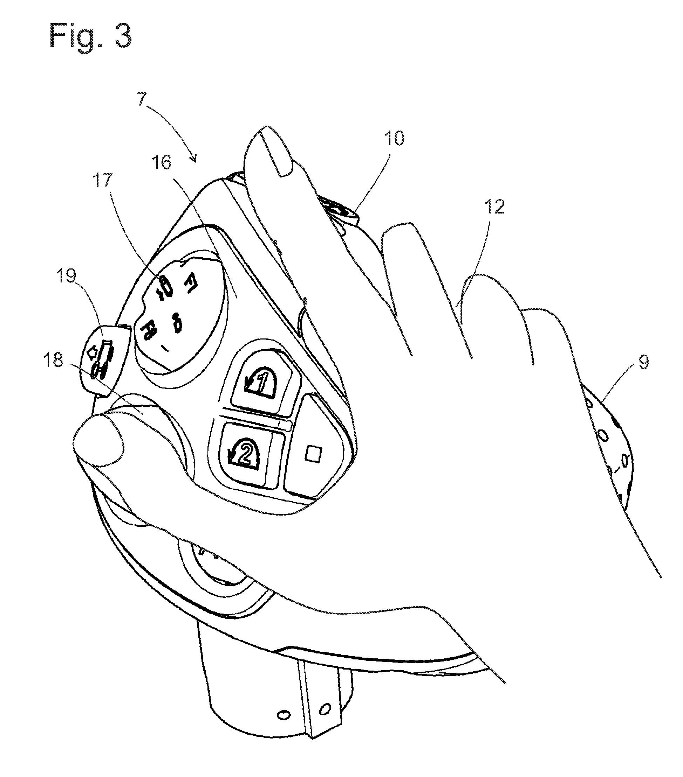

An der vom Fahrer abgewandten Flanke 11 des Griffkopfs 7 ist eine abwärts verlaufende Rille 12 geformt, deren Breite etwa der eines Fingers entspricht. Sie kann den Mittelfinger aufnehmen, wenn dieser nicht zur Betätigung von Bedienelementen des Bedienfeldes 10 benötigt wird, und so der Hand zusätzlichen Halt am Griffkopf 7 bieten. Fig. 3 zeigt den Griffkopf 7 mit einer daran angreifenden Hand. Die Hand befindet sich in einer normalen Betriebshaltung zum Betätigen des Griffs, in der der Handteller auf der Auflagefläche 9 aufliegt, die Achse des Handgelenks von der Daumenseite zur Kleinfingerseite hin abschüssig ist und die Hand sich in einer entspannten Stellung um die Oberseite des Griffkopfs wölbt. Der Mittelfinger liegt in der Rille 12, während der Zeigefinger an Bedienelementen des Bedienfeldes 10 positioniert ist.

Wie in Fig. 2 zu sehen, sind an dem Bedienfeld 10 drei Bedienelemente 13, 14, 15 vorgesehen. Zwei dieser Bedienelemente, 13 und 14, sind an einem vorderen Ende des Bedienfeldes 10 so platziert, dass der Fahrer, dessen Handfläche die Auflagefläche 9 berührt und dessen kleiner Finger und Ringfinger die Flanke 11 berühren, die Bedienelemente 13, 14 mit den Kuppen des Zeigefingers bzw. Mittelfingers berühren und betätigen kann, wenn diese auf dem Bedienfeld 10 ausgestreckt sind. Die Bedienelemente 13, 14 können Teile eines gleichen Wippschalters sein, der um eine in Längsrichtung der Finger ausgerichtete Achse kippbar ist, wobei vorzugsweise beide Bedienelemente 13, 14 einen gleichen Betriebsparameter des Fahrzeugs in positiver bzw. negativer Richtung verstellen. Das Bedienelement 15 ist in einem geringeren Abstand zur Auflagefläche 9 angeordnet, so dass es nur durch den gekrümmten Zeigefinger betätigbar ist. Das Bedienelement 15 ist in einer Aussparung des Bedienfeldes 10 versenkt angeordnet, so dass es nicht versehentlich betätigt werden kann, wenn mit ausgestreckten Fingern die Bedienelement 14, 13 gehandhabt werden.

Die Bedienelemente 13, 14 können beispielsweise zur Einstellung einer Soll-Geschwindigkeit einer Tempomatfunktion des Fahrzeugs dienen; im Gegensatz dazu wird bei inaktiver Tempomatfunktion die Fahrgeschwindigkeit des Fahrzeugs durch Verschieben des gesamten Griffs in oder entgegen der Fahrtrichtung gesteuert.

Die Taste 15 kann zum Auslösen vorprogrammierter Verstellvorgänge an mehreren Aggregaten des Fahrzeugs dienen, die regelmäßig in zeitlichem Zusammenhang durchzuführen sind. So kann zum Beispiel zur Erleichterung eines Wendemanövers am Feldrand durch einmalige Betätigung der Taste 15 ein Arbeitswerkzeug des Fahrzeugs wie etwa der Erntevorsatz 1 angehoben und die Sollgeschwindigkeit der Tempomatfunktion zeitweilig reduziert werden; durch erneute Betätigung nach erfolgtem Wendemanöver wird das Arbeitswerkzeug wieder abgesenkt und die Sollgeschwindigkeit auf den Ursprungswert zurückgesetzt.

Weitere Bedienelemente 17, 18, 19 sind an einem Bedienfeld 16 an einer dem Fahrer zugewandten seitlichen Flanke des Griffkopfs 7 vorgesehen. Die Bedienelemente 17, 18 sind durch den Daumen der auf der Auflagefläche 9 abgestützten Hand betätigbar. Der an dem Bedienfeld 16 anliegende Daumen des Fahrers ist im Wesentlichen in zwei Freiheitsgraden bewegbar, einmal in seiner Längsrichtung durch Beugen des Gelenks zwischen erstem und zweitem Glied und zum andern in seitlicher Richtung durch eine Schwenkbewegung des gesamten Daumens und seines Mittelhandknochens um eine zum Handgelenk benachbarte Achse. Der erfindungsgemäße Griff nutzt diesen Sachverhalt auf zweierlei Art. Zum einen sind die Bedienelemente 17, 18 an dem Bedienfeld 16 auf einem Bogen angeordnet, dessen Mittelpunkt einem hinteren Rand der Auflagefläche 9 benachbart ist, an dem das Handgelenk zu liegen kommt, so dass der Daumen durch die Schwenkbewegung zwischen den Bedienelementen 17, 18 wechseln kann, ohne dass sich die Hand am Griffkopf 7 bewegen muss. Zum andern haben die Bedienelemente 17, 18 jeweils zwei Schwenkfreiheitsgrade und zwar einerseits um eine zum Daumen parallele Achse und anderererseits um eine im rechten Winkel zum Daumen ausgerichtete Achse, so dass die eine Schwenkbewegung des Bedienelements 17 bzw. 18 durch ein Schwenken des Daumens und die andere durch ein Krümmen des Daumens angetrieben werden kann. Um der Kuppe des Daumens zum Antreiben dieser Bewegungen ausreichend Halt zu bieten, weisen die Bedienelemente 17, 18 jeweils konkave Außenflächen auf.

Die Bedienelemente 17, 18 können insbesondere zur manuellen oder halbautomatischen Lagesteuerung von Arbeitswerkzeugen des Fahrzeugs dienen, zum Beispiel in der Weise, dass, wenn das Bedienelement 17 oder 18 in seinem ersten Freiheitsgrad aus seiner Ruhestellung ausgelenkt ist, das Arbeitswerkzeug je nach Richtung der Auslenkung auswärts bzw. abwärts gefahren wird, so lange die Auslenkung anhält. Optional kann dabei die Geschwindigkeit, mit der das Werkzeug verstellt wird, vom Ausmaß der Auslenkung des Bedienelements oder von der darauf ausgeübten Kraft abhängig gemacht werden. Auslenken des Bedienelements 17 oder 18 in seinem zweiten Freiheitsgrad führt dazu, dass eine vorprogrammierte Zielstellung des Arbeitswerkzeugs angefahren wird, insbesondere eine Betriebsstellung in unmittelbarer Bodennähe und eine Ruhestellung, in der das Arbeitswerkzeug bis zu einem Anschlag vom Boden abgehoben ist.

Das Bedienelement 19 ist zu weit von der Auflagefläche 9 entfernt, um mit dem Daumen erreichbar zu sein, wenn der Handteller auf der Auflagefläche 9 ruht. Um das Bedienelement 19 zu betätigen, muss sich die Hand wie in Fig. 4 gezeigt von der Auflagefläche 9 lösen. Indem dabei der Zeigefinger in die Rille 12 eingreift, kann der Fahrer gleichzeitig mit dem Drücken des Bedienelements 19 einen kräftigen Zug entgegen der Fahrtrichtung auf den Griffkopf 7 ausüben. Das Bedienelement 19 dient zur Entsperrung des Fahrzeugs. Das heißt, bei ausgeschaltetem Motor ist der Multifunktionsgriff 6 in einer neutralen Stellung verriegelt, die einer Fahrtgeschwindigkeit Null entspricht. Um den Griff 6 aus dieser Stellung erstmalig auszulenken, ist es notwendig, gleichzeitig mit dem Ziehen des Griffs entgegen der Fahrtrichtung das Bedienelement 19 zu drücken. Da bei der Betätigung des Bedienelements 19 bis zu vier Finger der Hand in der Rille 12 und an der Flanke 11 anliegen, ist es leicht, die erforderliche Kraft auf den Griff auszuüben.

In Fig.4 sind ferner zwei Oberflächennormalen N1, N2 an die Oberseite des Griffkopfs 7 angezeichnet, eine an der Stelle, an der in der in Fig. 3 gezeigten Betriebshaltung der Hand die Handwurzelknochen anliegen und eine an einer in dieser Betriebshaltung mit der Spitze des Zeigefingers soeben noch erreichbaren Stelle. Der Winkel zwischen beiden beträgt zwischen 90° und 120°. Der Griffkopf 7 unterstützt die Hand somit in einer leicht gekrümmten Stellung, die ohne zu ermüden lange Zeit beibehalten werden kann.

**Bezugszeichen**
- 1: Erntevorsatz
- 2: Einzugsaggregat
- 3: Überladekrümmer
- 4: Armaturenbrett
- 5: Fahrerkabine
- 6: Multifunktionsgriff
- 7: Griffkopf
- 8: Stützen
- 9: Auflagefläche
- 10: Bedienfeld
- 11: Flanke
- 12: Rille
- 13: Bedienelement
- 14: Bedienelement
- 15: Bedienelement
- 16: Bedienfeld
- 17: Bedienelement
- 18: Bedienelement
- 19: Bedienelement

## Patentansprüche

1. Multifunktionsgriff (6) zum Steuern eines landwirtschaftlichen Fahrzeugs, der zum Einstellen von Parametern des Fahrzeugs in mehreren Positionen platzierbar ist und mit einem ersten, wenigstens ein Bedienelement (17, 18, 19) aufweisenden ersten Bedienfeld (16) ausgerüstet ist, **dadurch gekennzeichnet, dass** der Multifunktionsgriff eine Auflagefläche (9), die orientiert ist, um wenigstens einen Teil des Handtellers einer in einer Betriebshaltung aufliegenden Hand eines Benutzers zu unterstützen, und wenigstens ein weiteres Bedienfeld (10) mit wenigstens einem Bedienelement (13, 14, 15) aufweist, und dass Bedienelemente (17, 18, 13, 14) des ersten und des wenigstens einen weiteren Bedienfeldes (16, 10) für Finger der in der Betriebshaltung aufliegenden Hand erreichbar sind.

2. Multifunktionsgriff nach Anspruch 1, **dadurch gekennzeichnet, dass** das erste Bedienfeld (16) für den Daumen und das zweite Bedienfeld (10) für den Zeigefinger der in der Betriebshaltung auf der Auflagefläche (9) aufliegenden Hand erreichbar ist.

3. Multifunktionsgriff nach Anspruch 1 oder 2, **dadurch gekennzeichnet, dass** das erste Bedienfeld (16) an einer seitlichen Flanke des Multifunktionsgriffs angeordnet ist.

4. Multifunktionsgriff nach Anspruch 2 oder 3, **dadurch gekennzeichnet, dass** das erste Bedienfeld (16) wenigstens zwei primäre Bedienelemente (17, 18) aufweist, die durch Schwenken des Daumens der in der Betriebshaltung auf der Auflagefläche (9) aufliegenden Hand wahlweise erreichbar sind.

5. Multifunktionsgriff nach Anspruch 4, **dadurch gekennzeichnet, dass** wenigstens eines der primären Bedienelemente (17, 18) um eine in Längsrichtung des das Bedienelement (17, 18) berührenden Daumens und/oder eine in der Schwenkrichtung des Daumens orientierte Achse schwenkbar ist.

6. Multifunktionsgriff nach Anspruch 5, **dadurch gekennzeichnet, dass** das wenigstens eine primäre Bedienelement (17, 18) an einer Außenseite eine Mulde aufweist, die bemessen ist, um eine Daumenkuppe formschlüssig aufzunehmen.

7. Multifunktionsgriff nach einem der vorhergehenden Ansprüche, **dadurch gekennzeichnet, dass** das erste Bedienfeld (16) wenigstens ein sekundäres Bedienelement (19) aufweist, das für den Daumen der in der Betriebshaltung auf der Auflagefläche (9) aufliegenden Hand unerreichbar ist.

8. Multifunktionsgriff nach einem der vorhergehenden Ansprüche, **dadurch gekennzeichnet, dass** das zweite Bedienfeld (10) an einer Oberseite des Multifunktionsgriffs, vorzugsweise die Auflagefläche (9) stetig verlängernd, angeordnet ist.

9. Multifunktionsgriff nach einem der vorhergehenden Ansprüche, **dadurch gekennzeichnet, dass** eine Oberseite (9, 10) des Multifunktionsgriffs konvex gewölbt ist.

10. Multifunktionsgriff nach Anspruch 9, **dadurch gekennzeichnet, dass** Oberflächennormalen (N1, N2) der Auflagefläche (9) und des zweiten Bedienfeldes (10) einen Winkel von maximal 120° aufspannen.

11. Multifunktionsgriff nach einem der vorhergehenden Ansprüche, **dadurch gekennzeichnet, dass** wenigstens ein Bedienelement (13, 14) des zweiten Bedienfeldes (10) mit dem ausgestreckten Zeigefinger der in der Betriebshaltung auf der Auflagefläche (9) aufliegenden Hand erreichbar ist.

12. Multifunktionsgriff nach einem der vorhergehenden Ansprüche, **dadurch gekennzeichnet, dass** das wenigstens eine Bedienelement (13, 14) des zweiten Bedienfeldes (10) ein mit Zeigefinger und Mittelfinger der in der Betriebshaltung auf der Auflagefläche (9) aufliegenden Hand betätigbarer Wippschalter ist.

13. Multifunktionsgriff nach einem der vorhergehenden Ansprüche, **dadurch gekennzeichnet, dass** wenigstens ein mit dem gekrümmten Zeigefinger erreichbares Bedienelement (15) in einer Vertiefung des zweiten Bedienfeldes (10) angeordnet ist.

14. Multifunktionsgriff nach einem der Ansprüche 8 bis 13, **dadurch gekennzeichnet, dass** die Oberseite des Griffs von der Auflagefläche (9) zum zweiten Bedienfeld (10) hin keilartig verjüngt ist und eine dem ersten Bedienfeld (16) gegenüberliegende Flanke (11) des Griffs für wenigstens einen Finger der in der Betriebshaltung auf der Auflagefläche (9) aufliegenden Hand erreichbar ist.

15. Multifunktionsgriff nach Anspruch 14, **dadurch gekennzeichnet, dass** eine in der dem ersten Bedienfeld (16) gegenüberliegenden Flanke (11) gebildete Rille (12) ausgerichtet ist, um einen Finger der in der Betriebshaltung auf der Auflagefläche (9) aufliegenden Hand aufzunehmen.
